# EUROPÄISCHE PATENTSCHRIFT

(11) **EP 2 351 268 B1**
(45) Veröffentlichungstag und Bekanntmachung des Hinweises auf die Patenterteilung: **15.08.2012**
(21) Anmeldenummer: 09748223.6
(22) Anmeldetag: 02.10.2009
(51) Int. Cl.: H04B 17/00, H04B 1/707, H04L 1/24

(54) **VERFAHREN UND VORRICHTUNG ZU ANALYSE VON CODE DOMAIN POWER UND CODE DOMAIN ERROR POWER**
METHOD AND APPARATUS FOR ANALYSING CODE DOMAIN POWER AND CODE DOMAIN ERROR POWER
PROCÉDÉ ET DISPOSITIF D ANALYSE DE LA PUISSANCE DANS LE DOMAINE DES CODES ET DE LA PUISSANCE D ERREUR DANS LE DOMAINE DES CODES

(30) Priorität: 25.11.2008 DE 102008058823
(43) Veröffentlichungstag der Anmeldung: 03.08.2011
(73) Patentinhaber: Rohde & Schwarz GmbH & Co. KG, 81671 München (DE)
(72) Erfinder: XIE, Feng, 85570 Markt Schwaben (DE); HABRIH, Said, 80866 München (DE)
(74) Vertreter: Beder, Jens
(86) Internationale Anmeldenummer: PCT/EP2009/007090
(87) Internationale Veröffentlichungsnummer: WO 2010/060501

(56) Entgegenhaltungen:
- JP-A- 2006 135 541
- US-A1- 2003 039 264
- US-A1- 2004 039 763
- US-A1- 2004 213 173
- BIRGENHEIER R A: "OVERVIEW OF CODE-DOMAIN POWER, TIMING, AND PHASE MEASUREMENTS" HEWLETT-PACKARD JOURNAL, HEWLETT-PACKARD CO. PALO ALTO, US, Bd. 47, Nr. 1, 1. Februar 1996 (1996-02-01), Seiten 73-93, XP000559992

## Beschreibung

Die Erfindung betrifft ein Verfahren und eine Vorrichtung zur Analyse von Code Domain Power (CDP) und Code Domain Error Power (CDEP).

Aus der US 7,162,396 B2 ist eine Vorrichtung zum Darstellen von Code Domain Power (CDP) Messergebnissen. Die Vorrichtung stellt die Messergebnisse in Form von Balken in einem Diagramm dar. Das Diagramm weist eine horizontale Achse und eine vertikale Achse auf, wobei auf der horizontalen Achse Code-Kanäle und Spreizfaktoren und auf der vertikalen Achse ein Maß für die Leistung aufgetragen sind. Die Höhe eines Balkens gibt die Leistung eines Code-Kanals an. Seine Position auf der horizontalen Achse hingegen gibt den Code-Kanal und den Spreizfaktor an. Alternativ zu der Leistung eines aktiven Code-Kanals kann in dem Diagramm auch das Rauschen eines inaktiven Code-Kanals angezeigt werden. Ein Code Domain Error Power (CDEP) wird jedoch nicht dargestellt. Es ist daher nicht ersichtlich mit welchem Fehler ein aktiver Code-Kanal behaftet ist. Insbesondere ist es nicht ersichtlich, in welchem Verhältnis der Fehler zu der Leistung steht. Insbesondere ist es nicht möglich, den Fehler mit der Leistung zu vergleichen.

In der US 2004/0039763 A1 ist eine Vorrichtung und ein Verfahren zur Darstellung der Signalqualität eines CDMA-Signals (Code Divison Multiple Access) gezeigt. Die Signalleistung und die Rauschleistung werden für jeden Kanal aus einer Vielzahl von Übertragungskanälen ermittelt und auf einem Bildschirm gleichzeitig und einander zugeordnet dargestellt. Die Darstellung der ermittelten Signalleistung und der zugeordnet ermittelten Rauschleistung erfolgt für jeden Übertragungskanal in Form eines Balkens. Auf der Abszisse ist der jeweilige Code bzw. Übertragungskanal und in Richtung der Ordinate die Signalleistung und die Rauschleistung mit einer gemeinsamen Skala aufgetragen. Signalleistungsbalken und Rauschleistungsbalken sind neben- oder aufeinander angeordnet.

In der US 2003/0039264 A1 wird ein Verfahren zur Darstellung der Signalleistung für die einzelnen Codes (Code Domain Power und Code Domain Error Power) eines CDMA-Signals offenbart. Allerdings erfolgt die Darstellung einer ermittelten Code Domain Power und einer Code Domain Error Power in zwei separaten Diagrammen auf einem Bildschirm, jeweils einem Diagramm für die Code Domain Power und einem Diagramm für die Code Domain Error Power.

Der Erfindung liegt daher die Aufgabe zugrunde ein Verfahren und eine Vorrichtung zu schaffen, mit der ein Vergleich von Code Domain Power (CDP) und Code Domain Error Power (CDEP) eines Kanals möglich ist.

Die Aufgabe wird durch das erfindungsgemäße Verfahren gemäß Anspruch 1 und durch die erfindungsgemäße Vorrichtung gemäß Anspruch 6 gelöst.

Das erfindungsgemäße Verfahren zur Analyse von Code Domain Power (CDP) und Code Domain Error Power (CDEP) verschiedener Code-Kanäle umfasst ein Empfangen zumindest eines Signals, ein Auswerten des Signals, ein Ermitteln zumindest einer Code Domain Power (CDP) zumindest eines Code-Kanals, ein Ermitteln zumindest einer Code Domain Error Power (CDEP) des Code-Kanals und gleichzeitiges Darstellen der Code Domain Power (CDP) und der Code Domain Error Power (CDEP) zumindest eines Kanals.

Die erfindungsgemäße Vorrichtung zur gleichzeitigen Darstellung von Code Domain Power (CDP) und Code Domain Error Power (CDEP) verschiedener Code-Kanäle umfasst dazu eine Einrichtung zum Empfangen eines Signals, eine Einrichtung zum Auswerten des Signals, eine Einrichtung zum Ermitteln einer Code Domain Power (CDP) eines Code-Kanals, eine Einrichtung zum Ermitteln einer Code Domain Error Power (CDEP) des Code-Kanals und eine Einrichtung zum gleichzeitigen Darstellen der Code Domain Power (CDP) und der Code Domain Error Power (CDEP).

Ein zu messendes Signal, z.B. ein CDMA-Signal einer Basisstation, wird von der Einrichtung zum Empfangen eines Signals Empfangen und von einer Einrichtung zum Messen des Signals gemessen. Die Messung wird von der Einrichtung zum Auswerten des Signals ausgewertet. Aus der Auswertung des Signals wird mittels der Einrichtung zum Ermitteln einer Code Domain Power (CDP) eines Code-Kanals eine Code Domain Power (CDP) eines Code-Kanals ermittelt. Zu diesem Code-Kanal wird mittels der Einrichtung zum Ermitteln einer Code Domain Error Power (CDEP) des Code-Kanals eine Code Domain Error Power (CDEP) ermittelt. Mittels der Einrichtung zum gleichzeitigen Darstellen der Code Domain Power (CDP) und der Code Domain Error Power (CDEP) werden die ermittelte Code Domain Power (CDP) und die ermittelte Code Domain Error Power (CDEP) gleichzeitig dargestellt.

Die gleichzeitige Darstellung erlaubt eine einfache Übersicht über die Verhältnisse zwischen Code Domain Power (CDP) und Code Domain Error Power (CDEP) eines Code-Kanals. Ein Vergleich beider Größen ist dadurch ermöglicht und vereinfacht. Die Art der Darstellung kann zwischen verschiedenen Arten ausgewählt werden. Z.B. können verschiedene Skalen und/oder Farben usw. ausgewählt und einem Benutzer oder einer Anwendung angepasst werden.

In den Unteransprüchen sind vorteilhafte Ausführungsformen des erfindungsgemäßen Verfahrens bzw. der erfindungsgemäßen Vorrichtung dargestellt.

Vorzugsweise werden die Code Domain Power (CDP) und die Code Domain Error Power (CDEP) jeweils aus dem gleichen Zeitabschnitt des ausgewerteten Signals ermittelt. Dadurch sind die ermittelte Code Domain Power (CDP) und die ermittelte Code Domain Error Power (CDEP) tatsächlich zueinander gehörig und auf der gleichen Datengrundlage basierend. Zudem ist es auf diese Weise möglich, die tatsächlich zueinandergehörigen Daten mit einer höheren Rate zu aktualisieren. Dazu ist die Einrichtung zum Ermitteln der Code Domain Power (CDP) und die Einrichtung zum Ermitteln der Code Domain Error Power (CDEP) vorzugsweise so eingerichtet, dass die Code Domain Power (CDP) und die Code Domain Error Power (CDEP) jeweils aus dem gleichen Zeitabschnitt des ausgewerteten Signals ermittelbar sind.

Vorzugsweise wird die Code Domain Error Power (CDEP) auf der Grundlage eines von mehreren jeweils (z.B. direkt durch einen Benutzer und/oder indirekt durch ein Programm mittels Einrichtung zum Auswählen eines Algorithmus) auswählbaren Algorithmen ermittelt. Diese können in einem Speicher abgelegt und bei Bedarf geladen werden. Die Auswahl erfolgt z.B. durch eine Benutzereingabe aufgrund der der Algorithmus geladen wird. Die Auswahl ist dabei insbesondere von der zur Bestimmung des Algorithmus zur Ermittlung der Code Domain Power unabhängig.

Auf diese Weise ist es möglich, den Algorithmus zu wählen und einer Anwendung und/oder einem spezifischen Benutzerinteresse anzupassen. Dazu ist die Einrichtung zum Ermitteln der Code Domain Error Power (CDEP) so eingerichtet, dass die Code Domain Error Power (CDEP) auf der Grundlage eines von mehreren jeweils auswählbaren Algorithmen ermittelbar ist. Vorzugsweise umfasst die Vorrichtung zur gleichzeitigen Darstellung von Code Domain Power (CDP) und Code Domain Error Power (CDEP) dazu zudem eine Einrichtung zum Auswählen des Algorithmus.

Vorzugsweise werden die Code Domain Power (CDP) und die Code Domain Error Power (CDEP) in einem Diagramm mit einer horizontalen X-Achse und einer vertikalen Y-Achse dargestellt, die Code Domain Power (CDP) durch einen ersten Balken in positive Y-Richtung mit erster Skala dargestellt, die Code Domain Error Power (CDEP) durch einen zweiten Balken in negative Y-Richtung mit zweiter Skala dargestellt und der erste Balken und der zweite Balken einander gegenüber gestellt. Dadurch ist eine einfache und übersichtliche gleichzeitige Darstellung tatsächlich zueinandergehöriger Daten (CDP & CDEP) ermöglicht. Dazu ist die Einrichtung zum gleichzeitigen Darstellen der Code Domain Power (CDP) und der Code Domain Error Power (CDEP) vorzugsweise so eingerichtet, dass die Code Domain Power (CDP) und die Code Domain Error Power (CDEP) in einem Diagramm mit einer horizontalen X-Achse und einer vertikalen Y-Achse darstellbar sind, die Code Domain Power (CDP) durch einen ersten Balken in positive Y-Richtung mit erster Skala darstellbar ist, die Code Domain Error Power (CDEP) durch einen zweiten Balken in negative Y-Richtung mit zweiter Skala darstellbar ist und der erste Balken und der zweite Balken einander gegenüberstellbar sind.

Vorzugsweise werden die erste Skala und/oder die zweite Skala individuell, d.h. unabhängig voneinander, eingestellt. Durch diese Einstellbarkeit können die Skalen und die Größe der Darstellung der einzelnen Daten (CDP & CDEP) benutzerdefiniert eingestellt werden. Auf diese Weise kann die Darstellung vergrößert werden, falls ein Benutzer einen genauen Wert genauer erkennen möchte, und verkleinert werden, falls ein Benutzer den genauen Wert nicht die Gesamtdarstellung dominieren lassen möchte. Dazu ist die Vorrichtung zur gleichzeitigen Darstellung von Code Domain Power (CDP) und Code Domain Error Power (CDEP) verschiedener Code-Kanäle vorzugsweise so eingerichtet, dass die erste Skala und/oder die zweite Skala unabhängig voneinander einstellbar sind.

Vorzugsweise wird als Code Domain Power (CDP) eine Code Domain Power (CDP) eines I-Zweigs und/oder eine Code Domain Power (CDP) eines Q-Zweigs ermittelt. Auf diese Weise ist eine detailliertere Darstellung der Leistungsstruktur eines Gesamtsignals möglich, welches sich in Teilsignale gliedert.

Dazu ist die Einrichtung zum Ermitteln der Code Domain Power (CDP) so eingerichtet, dass als Code Domain Power (CDP) eine Code Domain Power (CDP) eines I-Zweigs ermittelbar ist. Die Einrichtung zum Ermitteln der Code Domain Error Power (CDEP) ist so eingerichtet, dass als Code Domain Power (CDP) eine Code Domain Power (CDP) eines Q-Zweigs ermittelbar ist.

Ein bevorzugtes Ausführungsbeispiel des erfindungsgemäßen Verfahrens zur gleichzeitigen Darstellung von Code Domain Power (CDP) und Code Domain Error Power (CDEP) ist in der Zeichnung dargestellt und wird in der nachfolgenden Beschreibung detailliert erläutert. Es zeigen:
- Fig. 1: zeigt ein Ablaufdiagram eines erfindungsgemäßen Verfahrens zur Analyse von Code Domain Power (CDP) und Code Domain Error Power (CDEP) ;
- Fig. 2: zeigt ein Block-Schaltbild einer erfindungsgemäßen Vorrichtung zur Analyse und gleichzeitigen Darstellung von Code Domain Power (CDP) und Code Domain Error Power (CDEP);
- Fig. 3: zeigt den Aufbau einer zweiten Ermittlungseinrichtung zur Ermittlung einer Code Domain Power (CDP) eines Code-Kanals;
- Fig. 4: zeigt eine bevorzugte Darstellung von Code Domain Power (CDP) und Code Domain Error Power (CDEP) mittels des erfindungsgemäßen Verfahrens bzw. mittels der erfindungsgemäßen Vorrichtung.

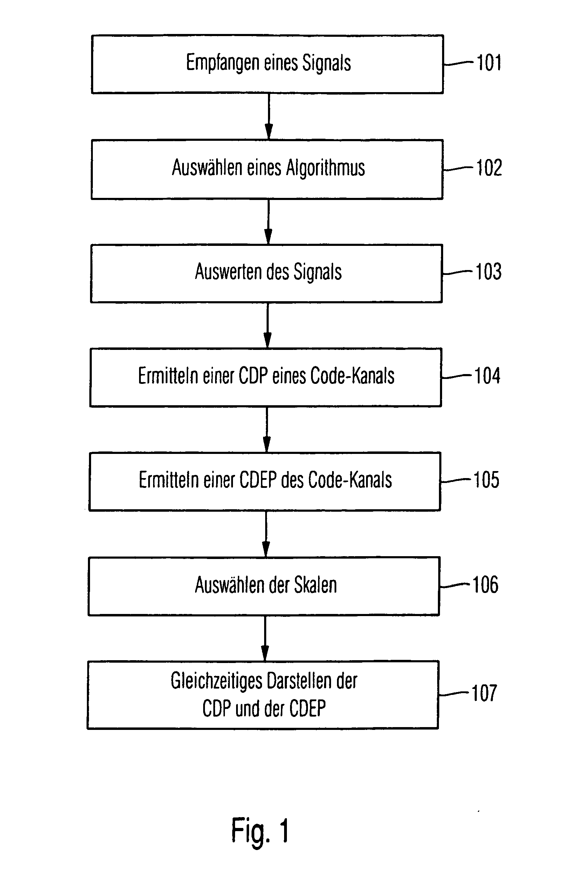

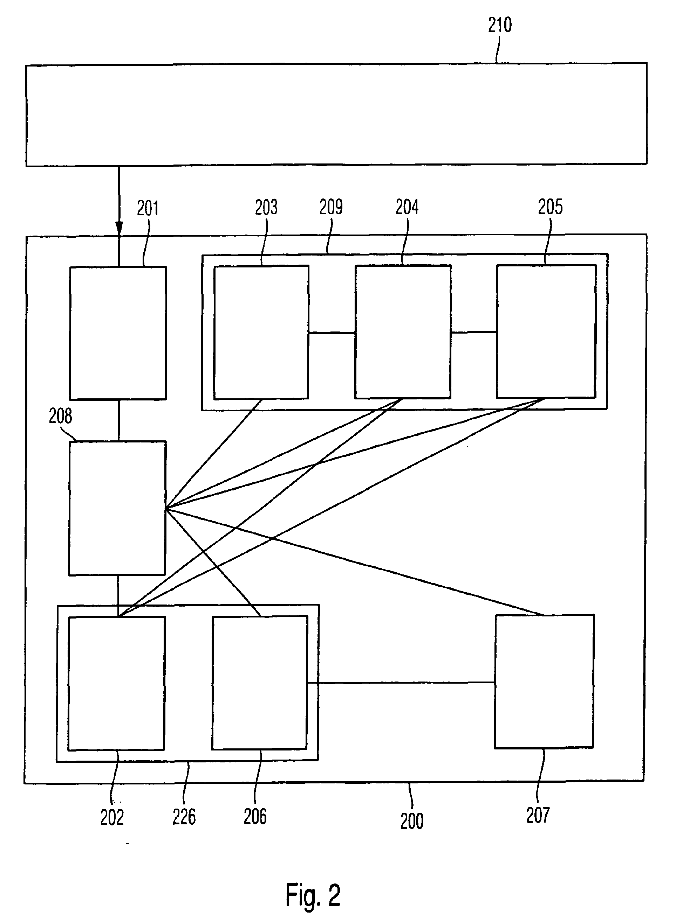

Fig. 1 und Fig. 2 zeigen ein Ablaufdiagram eines Ausführungsbeispiels des erfindungsgemäßen Verfahrens bzw. ein Blockschaltbild eines Ausführungsbeispiels der erfindungsgemäßen Vorrichtung.

Das erfindungsgemäße Verfahren zur gleichzeitigen Darstellung von Code Domain Power (CDP) und Code Domain Error Power (CDEP) verschiedener Code-Kanäle umfasst mehrere Schritte 101 - 107. Die erfindungsgemäße Vorrichtung 200 zur gleichzeitigen Darstellung von Code Domain Power (CDP) und Code Domain Error Power (CDEP) verschiedener Code-Kanäle umfasst dazu mehrere Einrichtungen zur Ausführung der Schritte 101 - 107. Die erfindungsgemäße Vorrichtung 200 zur Analyse und gleichzeitigen Darstellung von Code Domain Power (CDP) und Code Domain Error Power (CDEP) umfasst eine Empfangseinrichtung 201 zum Empfangen (Messen/Abtasten im Zeitbereich), Heruntermischen aus dem Hochfrequenzbereich und Tiefpassfiltern eines CDMA-Signals einer Basisstation 210. Das so verarbeitete Signal wird in einem Speicher 208 gespeichert. Das Messgerät 200 enthält ferner eine erste Ermittlungseinrichtung 202 zum Ermitteln eines Algorithmus mit dem die weitere Auswertung erfolgen soll, eine Auswerteinrichtung 203 zum Auswerten des Signals mit dem ermittelten Algorithmus, eine zweite Ermittlungseinrichtung 204 zum Ermitteln einer Code Domain Power (CDP) eines Code-Kanals, eine dritte Ermittlungseinrichtung 205 zum Ermitteln einer Code Domain Error Power (CDEP) des Code-Kanals (vorzugsweise gleichzeitig während des Ermittelns der CDP oder nach dem Ermitteln der CDP), eine vierte Ermittlungseinrichtung 206 zum Ermitteln einer Skala und eine Darstellungseinrichtung 207 zum gleichzeitigen Darstellen der Code Domain Power (CDP) und der Code Domain Error Power (CDEP). Die erste Ermittlungseinrichtung 202 und die vierte Ermittlungseinrichtung 206 sind in einer Kontrollvorrichtung 226 enthalten. Die Auswerteinrichtung 203, die zweite Ermittlungseinrichtung 204 und die dritte Ermittlungseinrichtung 205 sind in einer Kontrollvorrichtung 209 enthalten, welche von einen Benutzer zur Kontrolle der erfindungsgemäßen Vorrichtung 200 bedient werden kann.

Der Speicher 208 ist mit allen Einrichtungen 201 - 207 der erfindungsgemäßen Vorrichtung 200 für einen Datenaustausch verbunden. Zudem sind auch sowohl die erste Ermittlungseinrichtung 202 und die zweite Ermittlungseinrichtung 204 als auch die erste Ermittlungseinrichtung 202 und die dritte Ermittlungseinrichtung 205 als auch die vierte Ermittlungseinrichtung 206 und die Darstellungseinrichtung 207 als auch die Auswerteinrichtung 203 und die zweite Ermittlungseinrichtung 204 als auch die zweite Ermittlungseinrichtung 204 und die dritte Ermittlungseinrichtung 205 jeweils für einen Daten- bzw. Informationsaustausch miteinander verbunden. Der Speicher 208 speichert sowohl Messergebnisse als auch die Daten, welche durch die Einrichtungen, welche mit dem Speicher 208 verbunden sind, erzeugt und/oder bearbeitet werden. Insbesondere speichert der Speicher 208 die auswählbaren Algorithmen und die Software zur Steuerung der Darstellungseinrichtung 207.

Die erfindungsgemäße Vorrichtung umfasst zur Kommunikation mit einem Benutzer ein Display (207) bzw. Bildschirm (207) und eine Eingabeschnittstelle für z.B. eine.Tastatur, eine Maus und/oder Tasten und Drehknöpfe auf einer Frontplatte der erfindungsgemäßen Vorrichtung 200, welche mit der Kontrollvorrichtung 226 verbunden sind.

Das Verfahren beginnt mit einem Empfangen 101 zumindest eines Signals, vorzugsweise eines CDMA Signals einer Basisstation 210, mittels der Empfangseinrichtung 201 zum Empfangen des Signals. Zum Auswerten des Signals wird mittels einer ersten Ermittlungseinrichtung 202 ein Algorithmus ermittelt 102; z.B. wird durch Auswahl aus einer Menge von Algorithmen, die in dem Speicher 208 abgelegt. Das Signal wird in einer Auswerteinrichtung 203 zum Auswerten des Signals ausgewertet 103. Aus dem ausgewerteten Signal wird mittels einer zweiten Ermittlungseinrichtung 204 zum Ermitteln einer Code Domain Power (CDP) eines Code-Kanals zumindest eine Code Domain Power (CDP) des Code-Kanals ermittelt 104 Die CDP-Messung analysiert die Leistungsverteilung über die einzelnen Code-Kanäle. Aus dem ausgewerteten Signal wird zudem mittels einer dritten Ermittlungseinrichtung 205 eine Code Domain Error Power (CDEP) des Code-Kanals ermittelt 105; vorzugsweise mittels des ermittelten Algorithmus. Die CDEP ist eine Analyse des Fehlersignals im Codebereich, d. h. die Projektion der Fehlerleistung auf die einzelnen Codekanäle. Zur Gestaltung der Darstellung der Code Domain Power (CDP) und der Code Domain Error Power (CDEP) werden mittels einer vierten Ermittlungseinrichtung zum Ermitteln bzw. Auswählen von Skalen 206 vorzugsweise Skalen für die Darstellung ermittelt 106, z.B. durch Auswahl. Diese kann automatisch durch ein Programm und/oder aktiv durch einen Benutzer erfolgen. Die ermittelte Code Domain Power (CDP) und die ermittelte Code Domain Error Power (CDEP) werden mittels einer Darstellungseinrichtung 207 zum gleichzeitigen Darstellen der Code Domain Power (CDP) und der Code Domain Error Power (CDEP) gleichzeitig dargestellt 107.

Die gleichzeitige Darstellung 107 ermöglicht und vereinfacht die Übersicht über die Größenverhältnisse zwischen Code Domain Power (CDP) und Code Domain Error Power (CDEP) eines Code-Kanals. Die Darstellungsweise wird zwischen verschiedenen Möglichkeiten ausgewählt. Z.B. werden spezielle Skalen und/oder Farben und/oder Flächen und/oder Ränder von Flächen und/oder Balkenbreiten usw. ausgewählt. Automatisch und abhängig von der Code Domain Power (CDP) und/oder von der Code Domain Error Power (CDEP) oder durch einen Benutzer aktiv ausgewählt wird die Darstellung z.B. einer bestimmten Anwendung angepasst.

Die Code Domain Power (CDP) und die Code Domain Error Power (CDEP) werden in einem Ausführungsbeispiel jeweils aus dem gleichen Zeitabschnitt des ausgewerteten Signals ermittelt 104, 105. Damit ist sichergestellt, dass die ermittelte Code Domain Power (CDP) und die ermittelte Code Domain Error Power (CDEP) tatsächlich zueinander gehörig, d.h. auf der gleichen Datengrundlage basierend, sind. Da aus einem Zeitintervall beide Größen ermittelt werden können, sind keine zwei Zeitintervalle vonnöten, welche entweder zu einer unnötig langen Zeitspanne oder zu einer zu kleinen Stichprobengröße der Messwerte zur Ermittlung von dann nicht tatsächlich zueinandergehörigen Werten von CDP und CDEP führen würde. Dadurch ist es möglich, die tatsächlich zueinandergehörigen Daten mit einer höheren Rate bei akzeptabler Stichprobengröße der Messwerte zu aktualisieren.

Die zweite Ermittlungseinrichtung 204 zum Ermitteln der Code Domain Power (CDP) und die dritte Ermittlungseinrichtung 205 zum Ermitteln der Code Domain Error Power (CDEP) sind zu diesem Zweck so ausgeführt, dass die Code Domain Power (CDP) und die Code Domain Error Power (CDEP) jeweils auf der Grundlage von Messwerten eines einzelnen Zeitintervalls bzw. -abschnitts des ausgewerteten Signals ermittelbar sind. Die Einrichtungen 204 und 205 verwenden dazu gemeinsame Daten aus der Auswertungseinrichtung 203 zum Auswerten des Signals.

Die Code Domain Error Power (CDEP) wird vorzugsweise auf der Grundlage eines Algorithmus, welcher aus einer Menge mehrerer jeweils auswählbarer Algorithmen auswählbar ist ermittelt 105. Die Vorrichtung zur gleichzeitigen Darstellung von Code Domain Power (CDP) und Code Domain Error Power (CDEP) umfasst dazu vorzugsweise eine erste Auswahleinrichtung 202 zum Auswählen des Algorithmus. Ein Benutzer wählt den Algorithmus direkt oder indirekt aus einer Palette an möglichen Algorithmen aus. Zur direkten Auswahl gibt er z.B. an, auf welche Art Code Domain Error Power (CDEP) ermittelt werden soll.

Die Art der Darstellung von Code Domain Power (CDP) und Code Domain Error Power (CDEP) wird ebenfalls - automatisch oder durch einen Benutzer - ausgewählt. Vorzugsweise werden die Code Domain Power (CDP) und die Code Domain Error Power (CDEP) in einem X-Y-Diagramm mit horizontaler X-Achse und vertikaler Y-Achse dargestellt. Die Code Domain Power (CDP) wird durch einen ersten Balken erster Farbe in positive Y-Richtung mit erster Skala dargestellt. Analog wird die Code Domain Error Power (CDEP) vorzugsweise durch einen zweiten Balken zweiter Farbe in negative Y-Richtung mit zweiter Skala dargestellt. Der erste Balken und der zweite Balken werden vorzugsweise einander gegenüber gestellt. Vorzugsweise werden die erste Skala und/oder die zweite Skala unabhängig voneinander eingestellt. Die Breite der Balken, die erste Farbe und die zweite Farbe sind jeweils ebenfalls auswählbar. Anstatt einander gegenübergestellt zu werden, können die Balken wahlweise, d.h. ebenfalls auswählbar, z.B. auch nebeneinander gestellt werden. Anstelle von Balken können auch einfache Linien ausgewählt und verwendet werden. Die Auswahlaktionen werden vorzugsweise jeweils durch bzw. mittels der vierten Auswahleinrichtung 206 zum Auswählen der Skalen durchgeführt. Eine einfache und übersichtliche gleichzeitige Darstellung tatsächlich zueinandergehöriger Daten (CDP & CDEP) ist dadurch sowohl grundsätzlich ermöglicht als auch, z.B. durch einen Benutzer, flexibel gestaltbar. Die beschriebene gestaltbare Darstellung wird mittels der Darstellungseinrichtung 207 zum gleichzeitigen Darstellen der Code Domain Power (CDP) und der Code Domain Error Power (CDEP) umgesetzt 107.

Als Code Domain Power (CDP) wird vorzugsweise eine Code Domain Power (CDP) eines I-Zweigs und/oder eine Code Domain Power (CDP) eines Q-Zweigs ermittelt. Für jede Code Domain Power (CDP), sei es von dem I-Zweig oder von dem Q-Zweig, wird jeweils eine Code Domain Error Power (CDEP) ermittelt. Jeder CDP wird eine ihr entsprechende, d.h. ihr zugehörige, CDEP ermittelt. Diese zueinandergehörigen CDP und CDEP sind jeweils wie oben beschrieben darstellbar. Auf diese Weise ist eine vollständige Darstellung der Leistungsstruktur (Verteilung der Gesamtleistung auf die einzelnen Kanäle und Zweige) eines Gesamtsignals möglich, welches sich in Teilsignale (Kanäle und Zweige) gliedert. Die zweite Ermittlungseinrichtung 204 zum Ermitteln der Code Domain Power (CDP) ist so eingerichtet, dass als Code Domain Power (CDP) eine Code Domain Power (CDP) eines I-Zweigs und/oder eines Q-Zweigs ermittelbar ist.

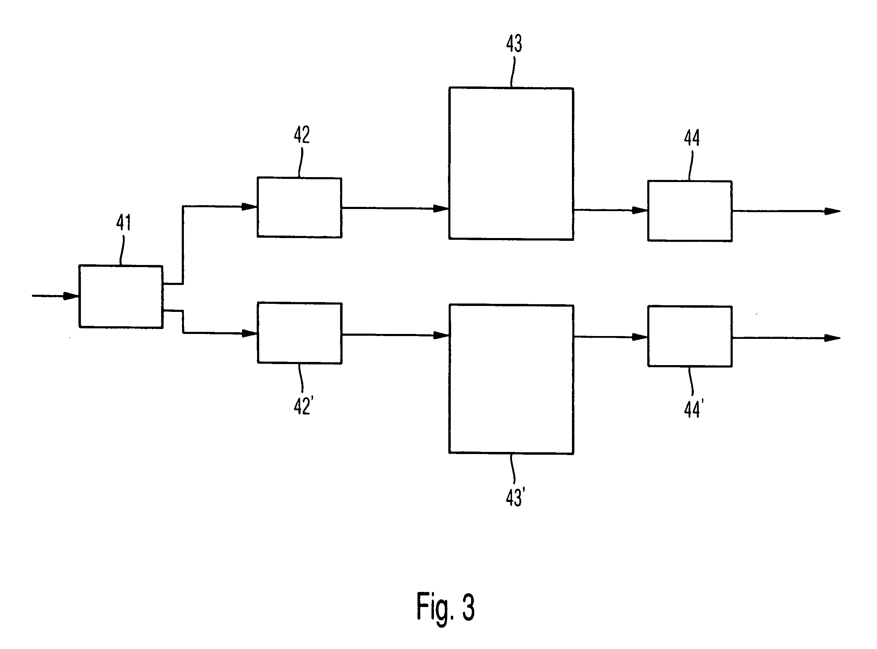

Fig. 3 zeigt, wie die zweite Ermittlungseinrichtung 204 eine Code Domain Power (CDP) eines Code-Kanals ermittelt 104. Die zweite Ermittlungseinrichtung 204 umfasst einen I/Q-Demodulator 41 einen ersten Filter 42, einen zweiten Filter 42', einen ersten Prozessor 43, einen zweiten Prozessor 43', einen ersten CDP-Rechner 44 und einen zweiten CDP-Rechner 44'. Der I/Q-Demodulator 41 teilt das Signal in ein I-Signal, welches an den ersten Filter 42 weitergeleitet wird, und in ein Q-Signal, welches an den zweiten Filter 42' weitergeleitet wird, auf. Der erste Filter 42 und der zweite Filter 42' leiten aus den jeweils empfangenen Signalen jeweils Amplitudeninformation und Phaseninformation and den ersten Prozessor 43 bzw. an den zweiten Prozessor 43'. Der erste Prozessor 43 und der zweite Prozessor 43' entschlüsseln und entspreizen jeweils die empfangenen Signale und leiten die Ergebnisse an den ersten CDP-Rechner 44 bzw. an den zweiten CDP-Rechner 44' weiter. Der erste CDP-Rechner 44 und der zweite CDP-Rechner 44' berechnen die Code Domain Power (CDP) des I-Signals (I-Zweig) bzw. des Q-Signals (Q-Zweig).

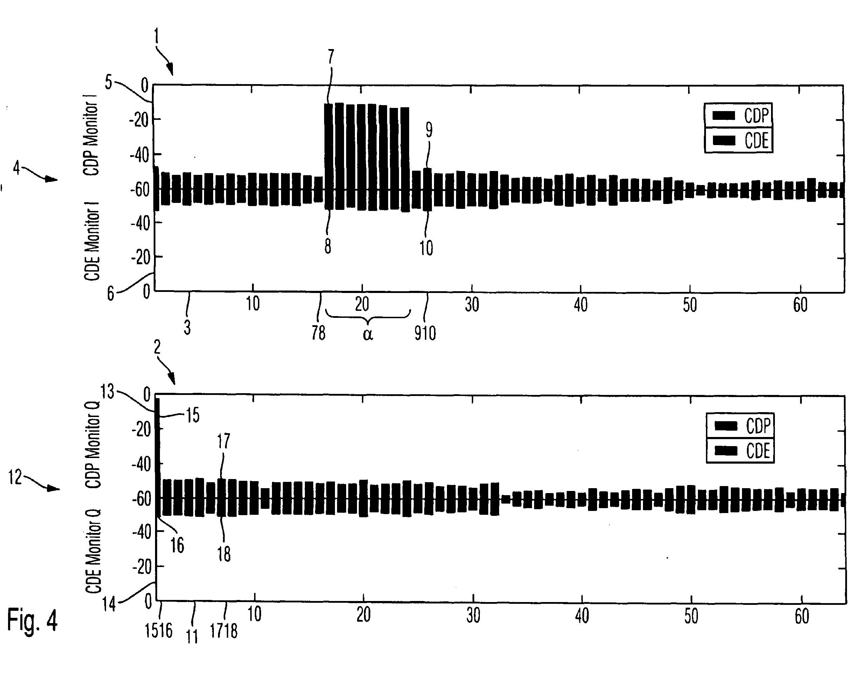

Fig. 4 zeigt eine Darstellung von CDP-Werten und CDEP-Werten in Form von Balken in Balkendiagrammen, welche mittels des beschriebenen Ausführungsbeispiels des erfindungsgemäßen Verfahrens, welches mittels des beschriebenen Ausführungsbeispiels der erfindungsgemäßen Vorrichtung durchführbar ist, ermittelbar sind.

In einem ersten Diagramm 1 sind eine horizontale erste X-Achse 3 und eine vertikale erste Y-Achse 4 gezeigt. Auf der horizontalen ersten X-Achse 3 sind Code-Kanäle angeordnet. Die vertikale erste Y-Achse ist in einen ersten Abschnitt 5 und einen zweiten Abschnitt 6 unterteilt. Der erste Abschnitt 5 weist die erste Skala zur Darstellung von CDP-Werten auf. Der zweite Abschnitt 6 weist die zweite Skala zur Darstellung von CDEP-Werten auf. In dem ersten Diagramm 1 sind sowohl zu einem ersten aktiven Code-Kanal 78 als auch zu einem ersten inaktiven Code-Kanal 910 jeweils sowohl eine CDP als auch eine zugehörige CDEP dargestellt. Der erste aktive Code-Kanal 78 weist eine erste CDP in Form eines ersten Balkens 7 und eine erste CDEP in Form eines zweiten Balkens 8 auf. Der erste inaktive Code-Kanal 910 weist eine zweite CDP in Form eines dritten Balkens 9 und eine zweite CDEP in Form eines vierten Balkens 10 auf. Der erste aktive Code-Kanal 78 ist in einer Gruppe von aktiven Code-Kanälen α enthalten.

Anstelle einer Darstellung der einzelnen Leistungen der Kanäle der Gruppe von aktiven Code-Kanälen α, welche z.B. jeweils einem gemeinsamen übergeordneten Code-Kanal niedrigeren Spreizfaktors zugeordnet sind, ist eine Gesamtleistung für die Gruppe von aktiven Code-Kanälen α in Form eines einzelnen Balkens darstellbar. Zu dieser Gesamtleistung für die Gruppe von aktiven Code-Kanälen α kann auch eine zugehörige CDEP ermittelt (z.B. durch Aufsummierung der einzelnen CDPs) und in Form eines weiteren einzelnen Balkens dargestellt werden. Die Gesamtleistung für die Gruppe von aktiven Code-Kanälen α wird analog zu der Leistung eines einzelnen Code-Kanals ermittelt. Das beschriebene Verfahren und die beschriebene Vorrichtung sind somit ebenfalls auf die Gesamtleistung CDP(α) und eine zu ihr gehörige CDEP(CDP(α)) anwendbar bzw. zu deren Ermittlung und Darstellung verwendbar.

Analog sind in einem zweiten Diagramm 2 eine horizontale zweite X-Achse 11 und eine vertikale zweite Y-Achse 12 gezeigt. Die horizontale zweite X-Achse 3 bildet Code-Kanäle ab, während die vertikale zweite Y-Achse in einen dritten Abschnitt 13 und einen vierten Abschnitt 14 unterteilt ist, wobei der dritte Abschnitt 13 eine dritte Skala zur Darstellung von CDP-Werten und der vierte Abschnitt 14 eine vierte Skala zur Darstellung von CDEP-Werten aufweisen. In dem zweiten Diagramm 2 sind sowohl zu einem zweiten aktiven Code-Kanal 1516 als auch zu einem zweiten inaktiven Kanal 1718 jeweils sowohl eine CDP als auch eine der CDP zugeordnete CDEP dargestellt, wobei der zweite aktive Code-Kanal 1516 eine dritte CDP in Form eines fünften Balkens 15 und eine dritte CDEP in Form eines sechsten Balkens 16 und der zweite inaktive Code-Kanal 1718 eine vierte CDP in Form eines siebten Balkens 17 und eine vierte CDEP in Form eines achten Balkens 18 aufweisen.

Das erste Diagramm 1 und das zweite Diagramm 2 beziehen sich auf die gleichen Code-Kanäle. In dem ersten Diagramm 1 sind zu den Code-Kanälen die zu ihren I-Zweigen gehörigen CDP-Werte und CDEP-Werte dargestellt. In dem zweiten Diagramm 2 hingegen sind zu den Code-Kanälen die zu ihren Q-Zweigen gehörigen CDP-Werte und CDEP-Werte gezeigt. In beiden Diagrammen 1, 2 sind jeweils jeder CDP ihre zugehörige CDEP gegenübergestellt.

Vorzugsweise wird dem Nullpunkt der Y-Achse der Wert -128dB zugeordnet, während der erste Abschnitt 5, der zweite Abschnitt 6, der dritte Abschnitt 13 und der vierte Abschnitt 14 von diesem Nullpunkt ausgehend bis zu 0dB reichen. Vorzugsweise wird für beide Y-Achsen-Richtungen in beiden Diagrammen 1, 2 jeweils eine gemeinsame Skala verwendet. Alternativ können dem Nullpunkt andere negative Werte zugeordnet werden. Die Länge der Abschnitte (5, 6, 13, 14) ist variierbar.

Fig. 4 zeigt, wie die zweite Ermittlungseinrichtung 204 eine Code Domain Power (CDP) eines Code-Kanals ermittelt 104. Die zweite Ermittlungseinrichtung 204 umfasst einen I/Q-Demodulator 41 einen ersten Filter 42, einen zweiten Filter 42', einen ersten Prozessor 43, einen zweiten Prozessor 43', einen ersten CDP-Rechner 44 und einen zweiten CDP-Rechner 44'. Der I/Q-Demodulator 41 teilt das Signal in ein I-Signal, welches an den ersten Filter 42 weitergeleitet wird, und in ein Q-Signal, welches an den zweiten Filter 42' weitergeleitet wird, auf. Der erste Filter 42 und der zweite Filter 42' leiten aus den jeweils empfangenen Signalen jeweils Amplitudeninformation und Phaseninformation and den ersten Prozessor 43 bzw. an den zweiten Prozessor 43'. Der erste Prozessor 43 und der zweite Prozessor 43' entschlüsseln und entspreizen jeweils die empfangenen Signale und leiten die Ergebnisse an den ersten CDP-Rechner 44 bzw. an den zweiten CDP-Rechner 44' weiter. Der erste CDP-Rechner 44 und der zweite CDP-Rechner 44' berechnen die Code Domain Power (CDP) des I-Signals (I-Zweig) bzw. des Q-Signals (Q-Zweig). Die Inaktiven Kanäle weisen eine Rauschleistung auf, welche zu den dargestellten Balken führen.

Die Erfindung ist nicht auf die dargestellten Ausführungsbeispiele beschränkt. Vielmehr sind auch einzelne Merkmale der Ausführungsbeispiele vorteilhaft miteinander kombinierbar.

## Patentansprüche

1. Verfahren zur Analyse von Code Domain Power und Code Domain Error Power verschiedener Code-Kanäle mit folgenden Schritten:
- Empfangen eines Signals (101), das in einem nach dem CDMA-Verfahren arbeitenden Mobilfunksystem gesendet wird,
- Auswerten des Signals (103),
- Ermitteln einer Code Domain Power eines Code-Kanals (104),
- Ermitteln einer Code Domain Error Power des Code-Kanals (105) und
- gleichzeitiges Darstellen der Code Domain Power und der Code Domain Error Power (107), wobei jeweils die zu einem Code-Kanal gehörende Code Domain Error Power und die Code Domain Power einander zugeordnet dargestellt werden,
**dadurch gekennzeichnet,**
**dass** die Code Domain Power und die Code Domain Error Power in einem Diagramm mit einer horizontalen X-Achse (3, 11) und einer vertikalen Y-Achse (4, 12) dargestellt werden, dass die Code Domain Power durch einen ersten Balken (7, 9, 15, 17) in positive y-Richtung mit einer ersten Skala dargestellt wird,
**dass** die Code Domain Error Power durch einen zweiten Balken (8, 10, 16, 18) in negative Y-Richtung mit zweiter Skala dargestellt wird,
**dass** der erste Balken (7, 9, 15, 17) und der zweite Balken (8, 10, 16, 18) derselben Position der X-Achse zugeordnet sind,
**dass** die erste Skala und die zweite Skala unabhängig voneinander eingestellt werden.

2. Verfahren nach Anspruch 1,
**dadurch gekennzeichnet,**
**dass** die Code Domain Power CDP und die Code Domain Error Power CDEP jeweils aus demselben Zeitabschnitt des ausgewerteten Signals ermittelt werden.

3. Verfahren nach Anspruch 1 oder 2,
**dadurch gekennzeichnet,**
**dass** die Code Domain Error Power auf der Grundlage eines von mehreren jeweils auswählbaren Algorithmen ermittelt wird.

4. Verfahren nach einem der Ansprüche 1 bis 3,
**dadurch gekennzeichnet,**
**dass** als Code Domain Power eine Code Domain Power eines I-Zweigs ermittelt wird.

5. Verfahren nach einem der Ansprüche 1 bis 4,
**dadurch gekennzeichnet,**
**dass** als Code Domain Power eine Code Domain Power eines Q-Zweigs ermittelt wird.

6. Vorrichtung zur gleichzeitigen Darstellung von Code Domain Power und Code Domain Error Power verschiedener Code-Kanäle mit einer Empfangseinrichtung (201) zum Empfangen eines Signals, einer Auswerteinrichtung (203) zum Auswerten des Signals, einer zweiten Ermittlungseinrichtung (204) zum Ermitteln einer Code Domain Power eines Code-Kanals, einer dritten Ermittlungseinrichtung (205) zum Ermitteln einer Code Domain Error Power des Code-Kanals und einer Darstellungseinrichtung (207) zum gleichzeitigen Darstellen der Code Domain Power und der Code Domain Error Power,
**dadurch gekennzeichnet,**
**dass** die Darstellungseinrichtung (207) zum gleichzeitigen Darstellen der Code Domain Power und der Code Domain Error Power so eingerichtet ist, dass
- die Code Domain Power und die Code Domain Error Power in einem Diagramm mit einer horizontalen X-Achse (3, 11) und einer vertikalen Y-Achse (4, 12) darstellbar sind,
- die Code Domain Power durch einen ersten Balken (7, 9, 15, 17) in positive y-Richtung mit einer ersten Skala darstellbar ist,
- die Code Domain Error Power durch einen zweiten Balken (8, 10, 16, 18) in negative Y-Richtung mit zweiter Skala darstellbar ist,
- der erste Balken (7, 9, 15, 17) und der zweite Balken (8, 10, 16, 18) derselben Position der X-Achse einander gegenüberstellbar sind, und
**dass** die Vorrichtung zur gleichzeitigen Darstellung von Code Domain Power und Code Domain Error Power verschiedener Code-Kanäle so eingerichtet ist, dass die erste Skala und die zweite Skala unabhängig voneinander einstellbar sind.

7. Vorrichtung nach Anspruch 6,
**dadurch gekennzeichnet,**
**dass** die zweite Ermittlungseinrichtung (204) zum Ermitteln der Code Domain Power und die dritte Ermittlungseinrichtung (205) zum Ermitteln der Code Domain Error Power so eingerichtet sind, dass die Code Domain Power CDP und die Code Domain Error Power jeweils aus dem gleichen Zeitabschnitt des ausgewerteten Signals ermittelbar sind.

8. Vorrichtung nach Anspruch 6 oder 7,
**dadurch gekennzeichnet,**
**dass** die dritte Ermittlungseinrichtung (205) zum Ermitteln der Code Domain Error Power so eingerichtet ist, dass die Code Domain Error Power auf der Grundlage eines von mehreren jeweils auswählbaren Algorithmen ermittelbar ist.

9. Vorrichtung nach einem der Ansprüche 6 bis 8,
**dadurch gekennzeichnet,**
**dass** die zweite Ermittlungseinrichtung (204) zum Ermitteln der Code Domain Power so eingerichtet ist, dass als Code Domain Power eine Code Domain Power eines I-Zweigs ermittelbar ist.

10. Vorrichtung nach einem der Ansprüche 6 bis 9,
**dadurch gekennzeichnet,**
**dass** die zweite Ermittlungseinrichtung (204) zum Ermitteln der Code Domain Power so eingerichtet ist, dass als Code Domain Power eine Code Domain Power eines Q-Zweigs ermittelbar ist.

## Claims

1. Method of analysing the Code Domain Power and Code Domain Error Power of different code channels, comprising the following steps:
- receiving a signal (101) that is transmitted in a mobile telephony system operating by the CDMA process,
- evaluating the signal (103),
- determining a Code Domain Power of a code channel (104),
- determining a Code Domain Error Power of the code channel (105) and
- simultaneously displaying the Code Domain Power and the Code Domain Error Power (107), while the Code Domain Power and the Code Domain Error Power, each of which belongs to a code channel, are associated with one another in the display,
**characterised in that**
the Code Domain Power and the Code Domain Error Power are displayed in a diagram with a horizontal X-axis (3, 11) and a vertical Y-axis (4, 12),
the Code Domain Power is represented by a first bar (7, 9, 15, 17) in the positive y-direction with a first scale,
the Code Domain Error Power is represented by a second bar (8, 10, 16, 18) in the negative Y-direction with a second scale,
the first bar (7, 9, 15, 17) and the second bar (8, 10, 16, 18) are associated with the same position on the X-axis,
the first scale and the second scale are set independently of one another.

2. Method according to claim 1, **characterised in that** the Code Domain Power CDP and the Code Domain Error Power CDEP are each determined from the same time segment of the evaluated signal.

3. Method according to claim 1 or 2, **characterised in that** the Code Domain Error Power is determined on the basis of one of a number of algorithms that may be chosen.

4. Method according to one of claims 1 to 3, **characterised in that** a Code Domain Power of an I-branch is determined as the Code Domain Power.

5. Method according to one of claims 1 to 4, **characterised in that** a Code Domain Power of a Q-branch is determined as the Code Domain Power.

6. Apparatus for simultaneously displaying the Code Domain Power and Code Domain Error Power of different code channels, with a receiving device (201) for receiving a signal, an evaluating device (203) for evaluating the signal, a second determining device (204) for determining a Code Domain Power of a code channel, a third determining device (205) for determining a Code Domain Error Power of the code channel and a display device (207) for simultaneously displaying the Code Domain Power and the Code Domain Error Power,
**characterised in that**
the display device (207) for simultaneously displaying the Code Domain Power and the Code Domain Error Power is arranged such that
- the Code Domain Power and the Code Domain Error Power can be displayed in a diagram with a horizontal X-axis (3, 11) and a vertical Y-axis (4, 12),
- the Code Domain Power can be represented by a first bar (7, 9, 15, 17) in the positive y-direction with a first scale,
- the Code Domain Error Power can be represented by a second bar (8, 10, 16, 18) in the negative Y-direction with a second scale,
- the first bar (7, 9, 15, 17) and the second bar (8, 10, 16, 18) can be set against the same position on the X-axis, and
the device for simultaneously displaying the Code Domain Power and the Code Domain Error Power is arranged such that the first scale and the second scale can be set independently of one another.

7. Apparatus according to claim 6,
**characterised in that**
the second determining device (204) for determining the Code Domain Power and the third determining device (205) for determining the Code Domain Error Power are arranged such that the Code Domain Power CDP and the Code Domain Error Power can each be determined from the same time segment of the evaluated signal.

8. Apparatus according to claim 6 or 7,
**characterised in that**
the third determining device (205) for determining the Code Domain Error Power is arranged such that the Code Domain Error Power can be determined on the basis of one of a number of algorithms that may be chosen.

9. Apparatus according to one of claims 6 to 8,
**characterised in that**
the second determining device (204) for determining the Code Domain Power is arranged such that a Code Domain Power of an I-branch can be determined as the Code Domain Power.

10. Apparatus according to one of claims 6 to 9,
**characterised in that**
the second determining device (204) for determining the Code Domain Power is arranged such that a Code Domain Power of a Q-branch can be determined as the Code Domain Power.

## Revendications

1. Procédé d'analyse de la puissance dans le domaine des codes et de la puissance d'erreur dans le domaine des codes de différents canaux de codage comprenant les étapes suivantes :
- réception (101) d'un signal, qui est émis dans un système de télécommunication mobile fonctionnant selon le procédé CDMA,
- évaluation (103) du signal,
- détermination (104) d'une puissance dans le domaine des codes d'un canal de codage,
- détermination (105) d'une puissance d'erreur dans le domaine des codes du canal de codage et
- représentation (107) simultanée de la puissance dans le domaine des codes et de la puissance d'erreur dans le domaine des codes, la puissance d'erreur dans le domaine des codes appartenant à un canal de codage et la puissance dans le domaine des codes étant respectivement représentées associées l'une à l'autre,
**caractérisé**
**en ce que** la puissance dans le domaine des codes et la puissance d'erreur dans le domaine des codes sont représentées dans un diagramme doté d'un axe horizontal X (3, 11) et d'un axe vertical Y (4, 12),
**en ce que** la puissance dans le domaine des codes est représentée par une première barre (7, 9, 15, 17) dans la direction y positive avec une première échelle,
**en ce que** la puissance d'erreur dans le domaine des codes est représentée par une deuxième barre (8, 10, 16, 18) dans la direction y négative avec une deuxième échelle,
**en ce que** la première barre (7, 9, 15, 17) et la deuxième barre (8, 10, 16, 18) sont associées à la même position de l'axe X,
**en ce que** la première échelle et la deuxième échelle sont définies indépendamment l'une de l'autre.

2. Procédé selon la revendication 1,
**caractérisé**
**en ce que** la puissance dans le domaine des codes, CDP, et la puissance d'erreur dans le domaine des codes, CDEP, sont déterminées chacune à partir du même segment temporel du signal évalué.

3. Procédé selon la revendication 1 ou 2,
**caractérisé**
**en ce que** la puissance d'erreur dans le domaine des codes est déterminée sur la base d'un algorithme sélectionnable respectivement parmi plusieurs algorithmes.

4. Procédé selon l'une quelconque des revendications 1 à 3,
**caractérisé**
**en ce qu'**une puissance dans le domaine des codes d'une branche I est déterminée en tant que puissance dans le domaine des codes.

5. Procédé selon l'une quelconque des revendications 1 à 4,
**caractérisé**
**en ce qu'**une puissance dans le domaine des codes d'une branche Q est déterminée en tant que puissance dans le domaine des codes.

6. Dispositif de représentation simultanée d'une puissance dans le domaine des codes et d'une puissance d'erreur dans le domaine des codes de différents canaux de codage, équipé d'un système de réception (201) destiné à recevoir un signal, d'un système évaluation (203) destiné à évaluer le signal, d'un deuxième système de détermination (204) destiné à déterminer une puissance dans le domaine des codes d'un canal de codage, d'un troisième système de détermination (205) destiné à déterminer une puissance d'erreur dans le domaine des codes du canal de codage et d'un système de représentation (207) destiné à représenter simultanément la puissance dans le domaine des codes et la puissance d'erreur dans le domaine des codes,
**caractérisé**
**en ce que** le système de représentation (207) destiné à représenter simultanément la puissance dans le domaine des codes et la puissance d'erreur dans le domaine des codes est agencé de sorte que
- la puissance dans le domaine des codes et la puissance d'erreur dans le domaine des codes puissent être représentées sur un diagramme doté d'un axe horizontal X (3, 11) et d'un axe vertical Y (4, 12),
- la puissance dans le domaine des codes puisse être représentée par une première barre (7, 9, 15, 17) dans une direction Y positive avec une première échelle,
- la puissance d'erreur dans le domaine des codes puisse être représentée par une deuxième barre (8, 10, 16, 18) dans une direction Y négative avec une deuxième échelle,
- la première barre (7, 9, 15, 17) et la deuxième barre (8, 10, 16, 18) de la même position de l'axe X puissent être mises en face l'une de l'autre, et
**en ce que** le système de représentation simultanée destiné à représenter simultanément la puissance dans le domaine des codes et la puissance d'erreur dans le domaine des codes de différents canaux de codage est agencé de sorte que la première échelle et la deuxième échelle puissent être réglées indépendamment l'une de l'autre.

7. Dispositif selon la revendication 6,
**caractérisé**
**en ce que** le deuxième système de détermination (204) destiné à déterminer la puissance dans le domaine des codes et le troisième système de détermination (205) destiné à déterminer la puissance d'erreur dans le domaine des codes sont agencés de sorte que la puissance dans le domaine des codes CDP et la puissance d'erreur dans le domaine des codes puissent être déterminées chacune à partir du même segment de temps du signal évalué.

8. Dispositif selon la revendication 6 ou 7,
**caractérisé**
**en ce que** le troisième système de détermination (205) destiné à déterminer la puissance d'erreur dans le domaine des codes est agencé de sorte que la puissance d'erreur dans le domaine des codes puisse être déterminée sur la base d'un algorithme sélectionnable respectivement parmi plusieurs algorithmes.

9. Dispositif selon l'une quelconque des revendications 6 à 8,
**caractérisé**
**en ce que** le deuxième système de détermination (204) destiné à déterminer la puissance dans le domaine des codes est agencé de sorte qu'une puissance dans le domaine des codes d'une branche I puisse être déterminée en tant que puissance dans le domaine des codes.

10. Dispositif selon l'une quelconque des revendications 6 à 9,
**caractérisé**
**en ce que** le deuxième système de détermination (204) destiné à déterminer la puissance dans le domaine des codes est agencé de sorte qu'une puissance dans le domaine des codes d'une branche Q puisse être déterminée en tant que puissance dans le domaine des codes.
